# DEMANDE DE BREVET EUROPEEN

(11) **EP 1 439 465 A1**
(43) Date de publication de la demande: **21.07.2004**
(21) Numéro de dépôt: 04290134.8
(22) Date de dépôt: 19.01.2004
(51) Int. Cl.: G06F 9/44

(54) **Procédé d'assistance personnalisée à la navigation au sein d'un réseau de télécommunication tel que le réseau internet**

(30) Priorité: 20.01.2003 FR 0300584
(71) Demandeur: FRANCE TELECOM SA, 75015 Paris (FR)
(72) Inventeur: Bothorel, Cécile, 22560 Pleumeur Bodou (FR); Chevalier, Karine, 22300 Lannion (FR)
(74) Mandataire: Maillet, Alain

(57) **Abrégé**

L'invention concerne un procédé d'assistance à la navigation au sein du réseau Internet adapté à fournir une aide en ligne à un utilisateur qui, ayant accédé à un site dudit réseau, exécute une succession d'opérations d'accès à l'information. Le procédé selon l'invention est adapté à fournir une aide en ligne personnalisée en se basant sur des profils anonymes emmagasinés dans des bases de données et qui peuvent être associés à l'utilisateur en fonction de sa navigation. Dans une première étape, des séquences d'opérations d'accès à l'information exécutées par ledit utilisateur sont récupérées, dans une seconde étape, ces séquences sont comparées à des motifs prédéterminées associées auxdits profils anonymes pour déterminer des profils anonymes pertinents et, dans une troisième étape, des informations d'aide en ligne sous forme de recommandations de lien sont générées en se basant sur lesdits profils anonymes pertinents.

## Description

La présente invention concerne de manière générale un procédé d'assistance personnalisée à la navigation au sein d'un réseau de télécommunication tel que le réseau Internet.

Dans un réseau de télécommunication comme le réseau Internet, de l'information est disponible au niveau de sites répartis sur le réseau et est accessible à partir d'un point d'accès quelconque comme un terminal utilisateur. Un système d'information réparti comme le World Wide Web met à la disposition des utilisateurs un ensemble distribué de documents multimédias composites reliés entre eux par des liens hypertextes. Les sites et les documents Web, identifiés par des adresses appelées URL (pour Uniform Resource Locator), sont accessibles et visualisables grâce à des logiciels appelés navigateurs. D'autres systèmes d'information existent. De manière générale, on désignera par le terme objet un ensemble de données formant un contenu individuel visé par l'utilisateur. Un objet pourra être constitué de fichiers tels que des pages HTML (pour Hypertext Mark-up Language), des images, des sons, etc. On désignera par le terme lien le moyen d'accès à un objet. Il pourra s'agir, par exemple, d'un lien hypertexte.

Un type courant d'accès à l'information se fait par le biais d'un serveur. Une fonction d'un serveur est de délivrer, à la requête d'un utilisateur, une information effectivement contenue dans un ensemble d'informations auquel il est associé. Le serveur permet à un utilisateur d'accéder à de l'information contenue par exemple dans un réseau local distant. Par exemple, un serveur Web reçoit une requête HTTP d'accès à un objet émise par le terminal utilisateur et transmet en retour l'objet demandé sous forme de message. Le terme HTTP (pour Hyper Text Transfer Protocol) désigne un protocole d'accès bien connu à une adresse URL du Web.

Par navigation on entend ici une succession d'opérations exécutées par un utilisateur à partir d'un terminal utilisateur associé à un navigateur pour accéder à de l'information disponible au niveau de sites répartis sur le réseau. Une session de navigation est l'ensemble des opérations d'accès à l'information disponible au niveau des sites répartis sur le réseau entre une connexion au réseau (login) et une déconnexion du réseau (logout). Une session de navigation peut être décomposée en une série d'opérations d'accès.

Dans la suite de la description, on parlera de "séquence de navigation" pour désigner une suite de telles opérations d'accès ordonnée, par exemple selon le déroulement dans le temps.

Du point de vue de l'utilisateur, les opérations d'accès à l'information sont générées par une série de commandes d'accès, par exemple des commandes d'activation de lien donnant lieu à requête HTTP d'accès à des objets identifiés par des adresses URL. Selon le type d'information considérée (texte, audio, vidéo, etc.), différents moyens d'accès à l'information peuvent être envisagés. Parmi ceux-ci, on peut citer une opération d'accès commandée par l'utilisateur communément désignée par le terme « clic », en référence à l'utilisation d'un moyen de pointage comme une souris permettant de positionner un pointeur sur un lien et d'activer ce lien par un moyen d'activation. Il peut également s'agir de commande vocale, commande au moyen du clavier, etc.

Du point de vue de l'utilisateur, les opérations d'accès peuvent être une consultation de pages. Mais il peut s'agir également d'édition, si l'on accède au document par une extension du protocole http telle que l'extension dite webDav. D'une manière générale, il s'agit de toute manipulation réalisée par un utilisateur d'un document accédé par le moyen d'écrit ci-dessus. On peut citer outre la consultation et l'édition, la transmission , l'archivage, etc. d'un document.

De manière générale, du point de vue d'un site sur lequel navigue l'utilisateur, la série d'opérations d'accès se traduit par une série d'objets accédés, par exemple un enchaînement de pages vues. Le site emmagasine dans un moyen de stockage prévu à cet effet l'historique des opérations d'accès concernant chaque utilisateur. On désigne communément une opération d'accès enregistrée par le site par le terme « log » désignant une trace informatique.

Par assistance à la navigation, on entend une aide fournie à l'utilisateur sous la forme notamment de recommandation de liens. Les liens peuvent se présenter sous forme d'adresses URL à activer ou bien sous forme de raccourcis à archiver. Les liens peuvent pointer sur des objets comme des produits à vendre sur un site, des images, des vidéos, des passages de texte particuliers etc. L'assistant doit être à même d'expliquer ses recommandations.

Par assistance personnalisée à la navigation, on entend une aide fournie à l'utilisateur tenant compte d'un profil de cet utilisateur. Autrement dit, les recommandations fournies par l'assistant varient en fonction du profil de l'utilisateur.

Des procédés et dispositifs d'assistance personnalisée à la navigation sont décrits, par exemple, dans les demandes de brevet WO-A-01 31510, WO-A-01 71525 et WO-A-O1 50299.

Dans ces procédés et dispositifs existants à l'heure actuelle, la personnalisation implique d'emmagasiner des informations sur l'utilisateur permettant l'identification la plus complète possible de cet utilisateur. Ces informations sont de plusieurs types, par exemple de type « sociodémographique » comme le nom, le prénom, l'âge, le sexe, le lieu de résidence, les revenus ou encore de type « préférences » indiquant les préférences de l'utilisateur dans divers domaines comme le cinéma, la littérature etc. Ces informations servent à segmenter la population d'utilisateurs de manière à pouvoir adapter le contenu proposé sur les pages en fonction de l'appartenance à une classe ou à une autre. De telles informations sont stockées et utilisées avec le consentement des utilisateurs, par exemple via une charge eTrust. L'identification peut se faire simplement par authentification, un utilisateur s'inscrivant puis accédant au site en lui transmettant des données d'identifiant (login) et des données de mot de passe. Un autre moyen d'identification peut être le numéro IP du terminal utilisateur, c'est-à-dire l'adresse utilisée par le protocole IP (Internet Protocol) comportant une partie identifiant le réseau et une partie identifiant le numéro d'équipement dans le réseau. Un troisième moyen d'identification peut être ce qui est connu sous le nom de « cookie HTTP ». Il s'agit d'un ensemble de bits de code qu'un serveur utilise pour emmagasiner des données sur un utilisateur avec qui il échange de l'information (client) et qui peuvent être récupérés plus tard par le même serveur soit lors de la même session, soit lors d'une session ultérieure.

L'ensemble des informations emmagasinées pour un utilisateur spécifique est désigné par le terme profil utilisateur ou profil client.

Un premier problème posé par la personnalisation de l'assistance à la navigation telle qu'elle est pratiquée à l'heure actuelle réside dans le simple fait qu'elle nécessite de demander à un utilisateur une participation active sous forme d'une communication de données personnelles. Cette implication de l'utilisateur est souvent mal perçue. Il a d'ailleurs été constaté que les informations données ne sont pas toujours exactes.

Un second problème posé par la personnalisation de l'assistance à la navigation telle qu'elle est pratiquée à l'heure actuelle réside dans le fait que les classes utilisées pour segmenter la population d'utilisateurs sont trop générales et ne rendent pas fidèlement compte des variations de navigation en fonction des utilisateurs. De nombreuses techniques d'exploitation de données, appelées data-mining, ont été développées pour affiner au mieux les classes d'utilisateurs. Toutefois les traitements de données qu'impliquent ces techniques sont relativement lourds et coûteux. En outre, ces traitements ne peuvent être réalisés en ligne, c'est-à-dire en même temps que la session de navigation. Un utilisateur a un profil et un seul qui évolue peu et périodiquement, au terme de longs processus de data-mining. Au cours d'une navigation, le profil utilisateur ne s'adapte pas aux différentes orientations des recherches qu'il conduit. Par conséquent, du point de vue de l'utilisateur, la personnalisation peut paraître pauvre.

Lorsqu'une assistance personnalisée à la navigation est mise en place et que la personnalisation apparaît pauvre du point de vue de l'utilisateur, l'utilisateur peut éprouver un ressenti défavorable du fait que des données personnelles lui sont demandées et que ce qu'il obtient en retour n'est pas satisfaisant. Ce ressenti de l'utilisateur peut le motiver à ne plus revenir sur le site. Demander des informations personnelles à un utilisateur est donc risqué du simple point de vue de la fidélisation des utilisateurs. La personnalisation doit dépasser le simple marketing classique de masse basé sur des grandes classes de la population.

La navigation d'un utilisateur est aujourd'hui relativement complexe du fait qu'elle peut être motivée par différents points de vue de l'utilisateur. Ce dernier peut avoir plusieurs centres d'intérêts et la navigation peut être motivée par l'un ou l'autre de ces centres d'intérêt voire par une combinaison de ces centres d'intérêt. De même la navigation de l'utilisateur est affectée par le fait qu'il poursuit différents d'objectifs, par le fait que la navigation se fait dans différents contextes ou même par le fait que l'utilisateur peut être d'humeurs différentes. La personnalisation doit pouvoir s'adapter plus finement aux différents points de vue d'un même utilisateur qui se traduisent par des navigations multi-centres d'intérêts, multi-objectifs, multi-contextes, voire, multi-humeurs.

Il a été proposé de développer l'analyse des navigations d'un utilisateur du web, discipline apparue dans le domaine de l'analyse des usages du web (web usage mining). Cette technique est basée notamment sur l'analyse des objets auxquels un utilisateur a accédé. L'analyse des motifs de navigation d'un utilisateur du web est connue sous le nom d'analyse de logs.

Dans la suite de la description, on utilisera l'expression "motif de navigation" (appelé pattern en terminologie anglo-saxonne) pour désigner un aspect récurrent de la navigation observable dans un ensemble de sessions de navigation.

La personnalisation peut s'appuyer sur l'analyse des navigations de façon à ne plus solliciter l'utilisateur. Cependant, les performances de la personnalisation utilisant les motifs issus de l'analyse des logs telle qu'elle est pratiquée actuellement sont relativement faibles. Les données disponibles sont uniquement celles d'un serveur : numéro de la machine, adresses des pages vues avec la date et le type de navigateur utilisé. Ces données sont souvent couplées avec des données déclaratives, de type données socio-démographiques ou données de préférence, demandées aux utilisateurs. Il faut alors exécuter les mêmes traitements de data-mining lourds et coûteux dont il a été question plus haut.

La présente invention vise une assistance à la navigation qui permettrait de surmonter les problèmes précédemment évoqués.

A cet effet, elle propose un procédé d'assistance personnalisée à la navigation au sein d'un réseau de télécommunication, ledit procédé étant adapté à fournir une aide en ligne à un utilisateur qui, ayant accédé à un site dudit réseau, exécute une succession d'opérations d'accès à l'information, ledit procédé étant caractérisé en ce qu'il comprend :
une étape de récupération d'une séquence d'opérations d'accès à l'information exécutées par ledit utilisateur,
une étape de comparaison de ladite séquence d'opérations d'accès à des motifs d'opérations d'accès prédéterminées, lesdits motifs d'opérations d'accès prédéterminées étant associées à des profils utilisateurs respectifs prédéterminés, et
une étape de génération d'informations se basant sur celui ou ceux desdits profils utilisateurs prédéterminés qui sont associés à un ou des motifs d'opérations d'accès prédéterminées qui correspondent à ladite séquence d'opérations d'accès récupérée.

Les informations générées par l'étape de génération d'informations sont avantageusement des informations permettant de constituer une aide en ligne, comme des recommandations de liens.

Selon l'invention, le profil utilisateur utilisé pour générer une aide en ligne est un profil anonyme, ce par quoi on entend un profil qui n'a pas été transmis par l'utilisateur lui-même mais qui a été attribué à cet utilisateur en fonction de sa navigation. Ce sont donc les opérations de navigation elles-mêmes qui déterminent le profil utilisateur. Ce profil anonyme est construit au fil des séquences de navigation et provient d'une association de profils prédéterminés.

Le procédé selon l'invention peut être exécuté par un moteur de personnalisation, c'est-à-dire un composant indépendant du site à personnaliser, du point de vue de son architecture. Un tel moteur de personnalisation peut être installé sur un site mais aussi retiré du site. Selon l'invention, le moteur de personnalisation cherche non pas à identifier directement un utilisateur mais à reconnaître une façon de naviguer, cette façon permettant de caractériser l'utilisateur. Cette façon de naviguer est caractérisée par des opérations d'accès à l'information, comme des enchaînements de pages vues, qui sont des données toujours disponibles dans un site web. Le procédé selon l'invention est donc adaptable à tout site. Pour pouvoir analyser la façon de naviguer de l'utilisateur en ligne, on récupère les commandes d'accès à l'information, par exemple des "clics". Un système de recueil des commande d'accès peut être ménagé au niveau d'un proxy adapté à générer des séquences des commande d'accès et à les transmettre au module au niveau duquel l'étape de comparaison est conduite au fur et à mesure qu'il les génère. Il ne s'agit pas de logs enregistrés par un serveur dans un fichier qui ne sont utiles que pour des traitements hors-ligne.

Selon un autre aspect de la présente invention, lesdites motifs d'opérations d'accès prédéterminés sont associés à des profils utilisateurs respectifs prédéterminés au cours d'une étape préliminaire de constitution de bases de données de profils anonymes.

Il s'agit de créer des bases de données contenant des jeux de navigations types associées à des données utilisateurs. Par exemple, ces bases de données peuvent comprendre des classes de navigations, des classes de préférences, des classes sociodémographiques et des sous-ensembles fréquents d'adresses URL. Bien entendu des liens adaptés sont crées entre ces bases de données. Un même sous-ensemble d'opérations de navigations peut correspondre à une pluralité de profils de préférences ou de profils sociodémographiques, et ainsi de suite. Les bases de données peuvent être établies en faisant appel à un panel d'utilisateurs à qui l'on demande de naviguer sur un site. Ces utilisateurs sont authentifiés et leurs navigations, éventuellement commentées, sont enregistrées. Des données déclaratives peuvent leur être demandées au cours de leurs navigations. Pour un site déjà existant, l'on peut s'appuyer sur ceux des utilisateurs du site qui, spontanément, donnent des informations personnelles. Les données de préférences et sociodémographiques récupérées, associées aux données de navigation sous forme de logs enregistrés par le site, sont traitées afin d'extraire lesdits motifs de navigation prédéterminés associés à des profils d'utilisateurs. Pour un nouveau site, l'on peut faire appel à un panel de beta-testeurs rémunérés qui acceptent de naviguer et de renseigner un profil. Alternativement, des profils de navigations types d'un site peuvent être produits avec expertise du créateur de site et intervention du service marketing, par exemple. La constitution des bases de données est réalisée en s'appuyant sur les techniques connues sous le nom de data-mining évoquées plus haut.

Avantageusement, lesdites bases de données de profils anonymes sont réactualisées en se basant sur l'utilisation de celui ou ceux desdits profils utilisateurs prédéterminés qui sont associés à un ou des motifs d'opérations d'accès prédéterminés qui correspondent à ladite séquence d'opérations d'accès récupéré.

Les bases de données peuvent être réactualisées par l'analyse de l'utilisation des profils, c'est-à-dire, par exemple l'utilisation que les utilisateurs font des informations personnalisées comme des recommandations de liens qui leurs sont données. Des listes de profils qui, lors de navigations, ont été associés à ces navigations et l'utilisation de ces profils sont stockés et, par un traitement de type data-mining opéré régulièrement, les bases de données de l'entrepôt sont révisées et/ou enrichies régulièrement. Bien entendu, ces bases de données peuvent être constamment réactualisées en utilisant les informations personnelles que certains utilisateurs peuvent éventuellement donner au cours de leurs navigations. L'apprentissage de nouveaux profils sera avantageusement réalisé en tâche de fond.

Selon un autre aspect de la présente invention, ladite étape de récupération des séquences d'opérations d'accès est exécutée à plusieurs reprises pour des séquences d'opérations d'accès successives, chacune desdits séquences comprenant un nombre d'opérations d'accès supérieur ou égal à un nombre minimum donné, lesdites étapes de comparaison et de génération d'informations étant exécutées après chaque étape de récupération en se basant sur l'ensemble des séquences d'opérations d'accès récupéré.

Les informations, par exemple d'aide en ligne, générées varient donc au cours de la navigation, les nouvelles séquences d'opérations d'accès récupérées permettant de créer ou d'éliminer des profils anonymes associés à la navigation. Ainsi, un utilisateur verra différents profils candidats se succéder durant sa navigation, ces profils candidats permettant une assistance adaptée aux différentes orientations de sa navigation. Le nombre minimum d'opérations d'accès que contient une séquence est le nombre minimum d'opérations d'accès nécessaire pour que la séquence puisse être associé avec un minimum de pertinence à un ou plusieurs profils. Avantageusement, ce nombre minimum sera égal à trois. C'est-à-dire qu'à partir d'un enchaînement de trois pages vues, il est possible d'associer cet enchaînement à au moins un profil pour produire une information comme, par exemple, une recommandation de lien.

Selon un autre aspect de la présente invention, ladite étape de récupération est exécutée une première fois pour récupérer une première séquence d'opérations d'accès comprenant un nombre d'opérations d'accès au moins égal audit nombre minimum, puis est exécutée à plusieurs reprises pour récupérer à chaque fois plusieurs séquences imbriquées d'opérations d'accès comprenant différents nombres d'opérations d'accès supérieurs ou égaux audit nombre minimum.

Donc à chaque fois que l'étape de récupération est exécutée, par exemple après chaque opération d'accès à l'information, plusieurs séquences imbriquées sont récupérées. Par exemple, peuvent être récupérées une première séquence comprenant les trois dernières opérations d'accès à l'information, une deuxième séquence comprenant les quatre dernières opérations d'accès à l'information et ainsi de suite jusqu'à une dernière séquence comprenant l'ensemble des opérations d'accès à l'information d'une navigation. Chacune de ces séquences d'accès peut être comparée aux motifs prédéterminés de manière à ajuster plus finement une liste de profils candidats associés à la navigation.

Selon un autre aspect de la présente invention, ladite étape de récupération récupère également des données caractéristiques des intervalles de temps existant entre les opérations d'accès à l'information successives de la séquence d'opérations d'accès récupérée, ladite étape de comparaison comparant ladite séquence d'opérations d'accès récupérée à des motifs d'opérations d'accès prédéterminés en tenant compte desdites données d'intervalles de temps respectives.

L'intervalle de temps existant entre des opérations d'accès à l'information est un critère permettant d'associer plus finement une séquence de navigation à un ou des profils anonymes. Une même séquence de navigation peut correspondre à plusieurs motifs de navigation préétablis associés dans les bases de données à différents profils anonymes, mais certains de ces profils pourront être rejetés en se basant sur les intervalles de temps entre les opérations de la séquence de navigation récupérée. Les données d'intervalles de temps permettent également d'isoler des séquences types de navigation caractéristiques de l'un ou l'autre profil.

Selon un autre aspect de la présente invention, ladite étape de récupération récupère également des données caractéristiques des objets correspondant aux opérations d'accès à l'information successives de la séquence d'opérations d'accès récupérée, ladite étape de comparaison comparant ladite séquence d'opérations d'accès récupérée à des motifs d'opérations d'accès prédéterminés en tenant compte desdites données d'objets.

Le type d'objet, par exemple le type d'une page vue, associé à une opération d'accès à l'information est une caractéristique permettant de décrire d'une façon plus générale une séquence de navigation. Suivant les types d'objets correspondant aux opérations d'une séquence récupérée, celle-ci peut correspondre à des motifs associés à des profils prédéterminés prenant en compte le type de généralisation des accès à l'information. Ainsi, d'autres profils candidats peuvent être associés à des motifs de navigation correspondant aux séquences de navigation récupérées.

Selon un autre aspect de la présente invention, ladite étape de comparaison associe à chaque motif correspondant à la séquence d'opérations d'accès récupérée lors de ladite étape de récupération une pluralité de profils pertinents auxquels sont associés des poids de pertinence, ceux desdits profils pertinents qui ont un poids de pertinence adapté étant ajoutés à une liste de profils pertinents associée audit utilisateur, ladite étape de génération d'information générant des informations correspondant à chacun des profils pertinents de ladite liste de profils pertinents.

Avantageusement, lesdites informations générées sont des recommandations présentées audit utilisateur, chacune des recommandations correspondant à un profil pertinent de ladite liste de profils pertinents étant présentée à l'utilisateur en tenant compte du poids de pertinence dudit profil.

Avantageusement, lors de l'étape de comparaison suivant chaque étape de récupération d'une séquence d'opérations d'accès ou de plusieurs séquences d'opérations d'accès les poids de pertinence des profils pertinents sont recalculés en tenant compte de la nouvelle séquence récupérée ou des nouvelles séquences récupérées, ceux des profils pertinents qui n'ont plus un poids de pertinence adapté étant écartés de ladite liste de profils pertinents.

Avantageusement, lors de l'étape de comparaison suivant chaque étape de récupération d'une séquence d'opérations d'accès ou de plusieurs séquences d'opérations d'accès les poids de pertinence des profils pertinents sont recalculés en tenant compte du fait que l'utilisateur a suivi ou non les recommandations présentées lors de l'étape de génération d'information précédente, ceux des profils pertinents qui n'ont plus un poids de pertinence adapté étant écartés de ladite liste de profils pertinents.

Les caractéristiques de l'invention mentionnées ci-dessus ainsi que d'autres apparaîtront plus clairement à la lecture de la description suivante d'un exemple de réalisation, ladite description étant faite en relation avec les dessins joints, parmi lesquels :
la Fig. 1 est un schéma montrant les entrées/sorties d'un moteur de personnalisation selon l'invention ; et
la Fig. 2 est un organigramme montrant de manière schématique le fonctionnement du moteur de personnalisation de la Fig. 1.

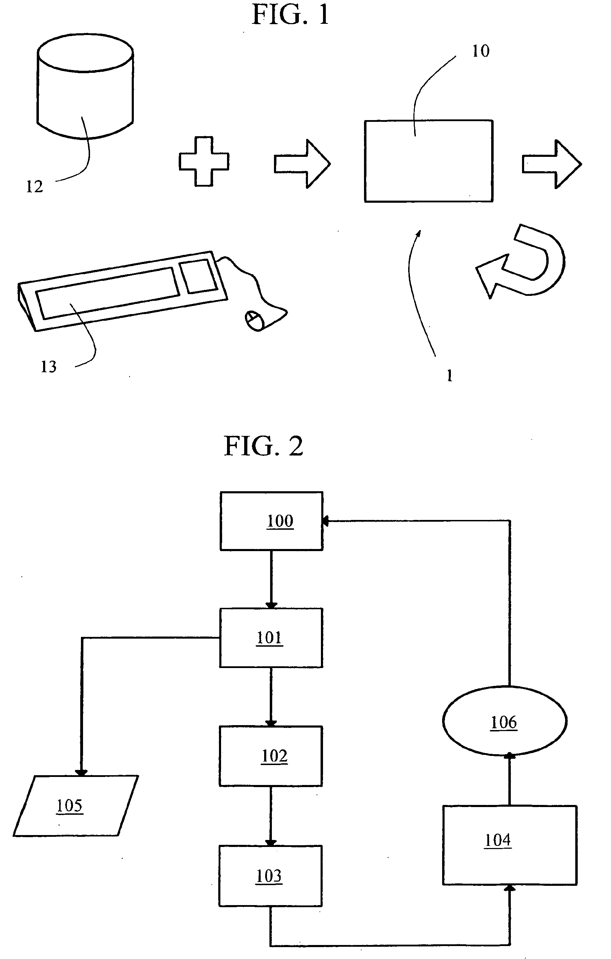

En référence à la Fig. 1, un moteur de personnalisation 1 selon un exemple de réalisation de la présente invention s'applique à un site serveur Web. Le moteur de personnalisation est le système global qui gère la personnalisation. Il s'agit d'un composant indépendant du site du point de vue de son architecture qui peut être interconnecté au site. Si on le désire, ce composant peut être retiré du site.

Du point de vue de son architecture, le moteur de personnalisation 1 comprend globalement un entrepôt de données 12 et un module de traitement 10.

L'entrepôt de données 12 contient des bases de données relatives, les unes, à des motifs de navigation, les autres à des données de préférence et sociodémographiques, ces bases de données étant mises en relation les unes avec les autres de manière à ce qu'à chaque motif de navigation correspondent un ou plusieurs profils candidats. L'entrepôt de données 12 contient quatre types de données formant des classes de navigation, des classes de préférences, des classes sociodémographiques, ainsi que des sous-ensembles fréquents d'adresses URL. Des liens sont créés entre ces quatre types de données.

Le module de traitement 10 comprend un sous-ensemble adapté à récupérer les navigations qu'un utilisateur effectue à partir d'un terminal utilisateur 13 et un sous-ensemble dynamique d'appariement adapté à mettre en relation une navigation courante et des profils prédéterminés extraits de l'entrepôt de données 12.

Le sous-ensemble du module 10 adapté à récupérer les navigations est un proxy, c'est-à-dire qu'il agit comme intermédiaire dans les échanges entre le terminal utilisateur 13 et le site serveur. Il reçoit donc les requêtes HTTP d'accès à des objets émises au niveau du terminal utilisateur et il peut donc générer des séquences de commande d'accès, par exemple des séquences de clics, et les soumettre au module d'appariement au fur et à mesure qu'il les construit. Les séquences de commande d'accès peuvent être soumises au module d'appariement avec des informations comme les intervalles de temps entre commande d'accès et, éventuellement, les types de pages vues. Ce sous-ensemble alimente également une base d'historique de navigations de l'entrepôt de profils 12. Enfin, ce sous-ensemble récupère également des informations concernant l'utilisation faite par l'utilisateur des informations personnalisées générées par le moteur de personnalisation. Par exemple, lorsque la personnalisation est réalisée sous forme de recommandation de liens, le module 10 enregistre le suivi de ces recommandations par l'utilisateur.

Le sous-ensemble dynamique d'appariement du module 10 est adapté, à partir d'une séquence de navigation courante, à mener une recherche dans les bases de données de l'entrepôt de profils 12 pour déterminer une pluralité de profils pertinents correspondant à cette séquence de navigation, chaque profil étant affecté d'un poids de pertinence calculé. Cette recherche peut être menée également à partir d'une pluralité de séquences récupérées simultanément ou successivement. Dans ce dernier cas, chaque nouvelle séquence récupérée peut conduire à ajouter des profils pertinents et à modifier les poids de pertinence pour les profils pertinents déjà présents. Enfin, des critères tels que les intervalles de temps entre les commandes d'accès et les types de pages vues peuvent également être pris en compte pour la conduite de la recherche dans la base de données et le calcul des poids de pertinence.

Selon la présente invention, une étape préliminaire de constitution de bases de données de profils anonymes doit être tout d'abord exécutée. Ainsi qu'il a déjà été expliqué précédemment, ces bases de données peuvent être établies en faisant appel à un panel d'utilisateurs à qui l'on demande de naviguer sur le site. Les données de préférences et sociodémographiques récupérées et les données de navigation correspondantes sont soumises à une analyse de type data-mining de manière à produire les quatre bases de données décrites plus haut et de créer les liens entre ces bases.

La Fig. 2 décrit de manière schématique le fonctionnement de la présente invention.

Au niveau de l'étape 100 un utilisateur effectue à partir d'un terminal utilisateur des opérations d'accès à l'information.

Au niveau de l'étape 101 le proxy collecte les commandes d'accès à l'information ou clics et transmet ces clics au module d'appariement, où ils sont décomposés en sous-ensembles lors de l'étape 102, mais également à l'entrepôt de profils 12 où ils sont emmagasinés au niveau de l'étape 105 dans un historique de navigation. Le proxy transmet également à l'entrepôt de profils 12 les données d'utilisation des listes de profils choisis (étape 105).

Au niveau de l'étape 102, le module d'appariement reçoit au fur et à mesure les commandes d'accès générés par le proxy. Dans cette étape, des séquences comportant au moins trois commandes d'accès doivent être isolées. Cette étape génère donc d'abord une première séquence comprenant les trois premières commandes d'accès de la navigation qu'il transmet à l'étape 103. Lorsque l'étape 102 est exécutée à nouveau, par la suite, elle génère des séquences de navigation imbriquées. Par exemple, lorsque l'utilisateur a effectué quatre opérations d'accès à l'information, l'étape 102 peut générer une première séquence de navigation contenant les quatre opérations d'accès et une seconde séquence de navigation comprenant les trois dernières opérations d'accès. Dans un mode de réalisation alternatif, l'étape 102 génère des séquences successives non imbriquées.

Au niveau de l'étape 103, le module d'appariement recherche dans les bases de données les profils pertinents pour la navigation courante. La recherche se fait via une fonction de matching. Plusieurs profils peuvent correspondre à chaque séquencede navigation récupérée par l'étape 102. La fonction de matching permet de tenir compte de l'ensemble des séquences récupérées pour déterminer les profils pertinents. Des poids de pertinence sont calculés pour chaque profil qui peut correspondre à la navigation courante. Ceux des profils pertinents qui ont un poids de pertinence adapté sont ajoutés à une liste de profils pertinents associée à la navigation courante. Si, par ailleurs, des profils présents sur cette liste se trouvent, du fait de nouveaux calculs conduits en tenant compte de la ou des dernières séquences transmises par l'étape 102, affectés d'un poids de pertinence qui n'est plus suffisant, ces profils sont écartés de la liste. D'autre part, les poids de pertinence des profils pertinents qui se trouvent sur la liste sont recalculés suivant que l'utilisateur a suivi ou non les recommandations déjà présentées. Le fait que l'utilisateur suive des recommandations présentées en relation avec un profil renforce le poids de pertinence de ce profil.

La liste des profils pertinents est utilisée pour réaliser la personnalisation du site au niveau de l'étape 104. Chaque profil peut donner lieu à une recommandation de lien 106 présentée à l'utilisateur par un assistant à la navigation. La recommandation de lien est donnée en tenant compte du poids de pertinence du profil associé. Les liens peuvent être des adresses URL. Il peut s'agir également de raccourcis à archiver dans les bookmarks. Ces liens peuvent également pointer sur des objets tels que produits à vendre sur le site, images, vidéos, etc. Ainsi qu'il est bien connu, et avantageusement en se basant sur les poids de pertinence déterminés, l'assistant peut expliquer les conseils qu'il donne et peut fournir à l'utilisateur une vision de sa représentation dans le système, c'est-à-dire du ou des profils que le système lui attribue.

Le procédé retourne ensuite à l'étape 100 où il attend que l'utilisateur effectue une nouvelle opération de navigation.

Un exemple de fonctionnement du procédé selon la présente invention va maintenant être décrit en référence à une navigation simple comprenant quatre commandes d'accès à l'information successives que nous désignerons par les lettre A, B, C et D.

Tant que le proxy n'a pas récupéré trois commandes d'accès, le procédé ne va pas au delà de l'étape 102, se contentant de transmettre les commandes d'accès récupérées à l'entrepôt de profils au niveau de l'étape 105. Une fois la commande C exécutée par l'utilisateur, l'étape 102 transmet une première séquence de navigation constituée des commandes A, B et C à l'étape 103. Au niveau de l'étape 103, le module d'appariement effectue en se basant sur la séquence récupérée une recherche dans les bases de données de l'entrepôt de profils lui permettant de mettre à jour un certain nombre de profils pertinents dont ceux qui ont un poids de pertinence adapté sont ajoutés à une liste de profil pertinents. Cette liste est transmise à l'étape 104 où un assistant à la navigation se base sur les profils de la liste pour établir des recommandations de liens. Chaque recommandation est associée à un profil et elle est présentée en tenant compte du poids de pertinence de ce profil. Dans l'exemple représenté, un seul profil pertinent a été ajouté à la liste et, suivant ce profil, l'assistant recommande à l'utilisateur un lien correspondant à la commande D. De retour à l'étape 100, l'utilisateur va suivre la recommandation et exécuter la commande D. Au niveau de l'étape 101, cette commande est récupérée par le proxy et transmise d'une part à l'étape 105 pour enregistrement dans l'entrepôt de profils et d'autre part à l'étape 102. Au niveau de l'étape 101 sont également transmises à l'étape 105 les données découlant du fait que l'utilisateur a suivi la recommandation faite et qui serviront à l'enrichissement de l'entrepôt de données lors du prochain traitement de data mining. Au niveau de l'étape 102, deux nouvelles séquences de navigation sont générées, une première comprenant les quatre commandes A, B, C et D et une seconde comprenant les trois dernières commandes B,C et D. Au niveau de l'étape 103, le module d'appariement effectue en se basant sur l'une et l'autre séquences récupérées des recherches dans les bases de données de l'entrepôt de profils lui permettant de mettre à jour un certain nombre de profils pertinents dont ceux qui ont un poids de pertinence adapté sont ajoutés à la liste de profil pertinents. Le procédé se poursuit ensuite de la même façon.

Les bases de données peuvent être réactualisées par l'analyse de l'utilisation des profils, c'est-à-dire, par exemple l'utilisation que les utilisateurs font des informations personnalisées comme des recommandations de liens qui leurs sont données. Des traitements de type data-mining sont opérés régulièrement à partir des listes de profils qui ont été générées et de leurs utilisations. Bien entendu, ces bases de données peuvent être constamment réactualisées en utilisant les informations personnelles que certains utilisateurs peuvent éventuellement donner au cours de leurs navigations. L'apprentissage de nouveaux profils sera avantageusement réalisé en tâche de fond.

L'entrepôt de profils anonymes peut être mis en commun pour plusieurs sites et hébergé, par exemple, par un tiers de confiance qui prend à sa charge la constitution de panels, le pilotage de la navigation panéliste sur différents sites clients, la constitution de l'entrepôt de profils anonymes et la maintenance de cet entrepôt de profils anonymes alimenté par les sites clients en logs nouveaux et historiques d'utilisation des profils anonymes ainsi qu'en corrections manuelles effectuées par des utilisateurs auxquels ont été associés des profils que ces utilisateurs eux mêmes ont jugé inexacts.

Un procédé selon l'invention peut être aussi mis en oeuvre sur un intranet en tenant compte de l'enchaînement des commandes d'accès à l'intranet, des types de ressources différentes vues, consultées, éditées, créés, des personnes contactées, etc.

## Revendications

1. Procédé d'assistance personnalisée à la navigation au sein d'un réseau de télécommunication, ledit procédé étant adapté à fournir une aide en ligne à un utilisateur qui, ayant accédé à un site dudit réseau, exécute une succession d'opérations d'accès à l'information, ledit procédé étant **caractérisé en ce qu'**il comprend :
une étape (101, 102) de récupération d'une séquence d'opérations d'accès à l'information exécutées par ledit utilisateur,
une étape (103) de comparaison de ladite séquence d'opérations d'accès à des motifs d'opérations d'accès prédéterminés, lesdits motifs d'opérations d'accès prédéterminés étant associés à des profils utilisateurs respectifs prédéterminés, et
une étape (104) de génération d'informations d'assistance personnalisée à la navigation se basant sur celui ou ceux desdits profils utilisateurs prédéterminés qui sont associés à un ou des motifs d'opérations d'accès prédéterminés qui correspondent à ladite séquence d'opérations d'accès récupérée.

2. Procédé selon la revendication 1, **caractérisé en ce que** lesdits motifs d'opérations d'accès prédéterminés sont associés à des profils utilisateurs respectifs prédéterminés au cours d'une étape préliminaire de constitution de bases de données de profils anonymes.

3. Procédé selon la revendication 2, **caractérisé en ce que** lesdites bases de données de profils anonymes sont réactualisées en se basant sur l'utilisation de celui ou de ceux desdits profils utilisateurs prédéterminés qui sont associés à un ou des motifs d'opérations d'accès prédéterminés qui correspondent à ladite séquence d'opérations d'accès récupérée.

4. Procédé selon l'une quelconque des revendications précédentes, **caractérisé en ce que** ladite étape de récupération (101, 102) des séquences d'opérations d'accès est exécutée à plusieurs reprises pour des séquences d'opérations d'accès successives, chacune desdites séquences comprenant un nombre d'opérations d'accès supérieur ou égal à un nombre minimum donné, lesdites étapes de comparaison (103) et de génération d'informations (104) étant exécutées après chaque étape de récupération (101, 102) en se basant sur l'ensemble des séquences d'opérations d'accès récupérées.

5. Procédé selon la revendication 4, **caractérisé en ce que** ladite étape de récupération (101, 102) est exécutée une première fois pour récupérer une première séquence d'opérations d'accès comprenant un nombre d'opérations d'accès au moins égal audit nombre minimum, puis est exécutée à plusieurs reprises pour récupérer à chaque fois plusieurs séquences imbriquées d'opérations d'accès comprenant différents nombres d'opérations d'accès supérieurs ou égaux audit nombre minimum.

6. Procédé selon l'une quelconque des revendications précédentes, **caractérisé en ce que** ladite étape de récupération (101, 102) récupère également des données caractéristiques des intervalles de temps existant entre les opérations d'accès à l'information successives de la séquence d'opérations d'accès récupérée, ladite étape de comparaison (103) comparant ladite séquence d'opérations d'accès récupérée à des motifs d'opérations d'accès prédéterminés en tenant compte desdites données d'intervalles de temps respectives.

7. Procédé selon l'une quelconque des revendications précédentes, **caractérisé en ce que** ladite étape de récupération (101, 102) récupère également des données caractéristiques des objets correspondant aux opérations d'accès à l'information successives de la séquence d'opérations d'accès récupérée, ladite étape de comparaison comparant ladite séquence d'opérations d'accès récupérée à des motifs d'opérations d'accès prédéterminés en tenant compte desdites données d'objets.

8. Procédé selon l'une quelconque des revendications précédentes, **caractérisé en ce que** ladite étape de comparaison (103) associe à chaque séquence d'opérations d'accès récupérée lors de ladite étape de récupération (101, 102) une pluralité de profils pertinents auxquels sont associés des poids de pertinence, ceux desdits profils pertinents qui ont un poids de pertinence adapté étant ajoutés à une liste de profils pertinents associée audit utilisateur, ladite étape de génération d'informations (104) générant des informations correspondant à chacun des profils pertinents de ladite liste de profils pertinents.

9. Procédé selon la revendication 8, **caractérisé en ce que** lesdites informations générées par ladite étape de génération d'informations (104) sont des recommandations présentées audit utilisateur, chacune des recommandations associées à un profil pertinent de ladite liste de profils pertinents étant présentée à l'utilisateur en tenant compte du poids de pertinence dudit profil.

10. Procédé selon la revendication 8 ou 9, **caractérisé en ce que**, lors de l'étape de comparaison (103) suivant chaque étape de récupération (101, 102) d'une séquence d'opérations d'accès ou de plusieurs séquences d'opérations d'accès, les poids de pertinence des profils pertinents sont recalculés en tenant compte de la nouvelle séquence récupérée ou des nouvelles séquences récupérées, ceux des profils pertinents qui n'ont plus un poids de pertinence adapté étant écartés de ladite liste de profils pertinents.

11. Procédé selon l'une quelconque des revendications 8 à 10, **caractérisé en ce que**, lors de l'étape de comparaison (103) suivant chaque étape de récupération (101, 102) d'une séquence d'opérations d'accès ou de plusieurs séquences d'opérations d'accès, les poids de pertinence des profils pertinents sont recalculés en tenant compte du fait que l'utilisateur a suivi ou non les recommandations présentées lors de l'étape de génération d'informations (104) précédente, ceux des profils pertinents qui n'ont plus un poids de pertinence adapté étant écartés de ladite liste de profils pertinents.

12. Système d'assistance personnalisée à la navigation au sein d'un réseau de télécommunication, **caractérisé en ce qu'**il comprend un moteur de personnalisation (1) comprenant un entrepôt de données (12) contenant des bases de données relatives à des motifs de navigation prédéterminés et à des données de profils utilisateurs prédéterminées et un module de traitement (10) comprenant des moyens pour récupérer des séquences de navigation qu'un utilisateur effectue à partir d'un terminal (13) et des moyens pour mettre en oeuvre un procédé d'assistance personnalisée à la navigation conformément aux revendications 1 à 11.

13. Système d'assistance personnalisée à la navigation selon la revendication 12, **caractérisé en ce que** ledit entrepôt de données (12) est hébergé par un tiers de confiance.

14. Système selon la revendication 12 ou 13, **caractérisé en ce que** lesdits moyens pour récupérer des séquences de navigation sont un proxy qui agit comme intermédiaire dans les échanges entre ledit terminal (13) et le site serveur.
